# EUROPEAN PATENT APPLICATION

(11) **EP 4 534 589 A1**
(43) Date of publication of application: **09.04.2025**
(21) Application number: 23202233.5
(22) Date of filing: 06.10.2023
(51) Int. Cl.: C08J 5/24, B32B 27/12, B32B 27/30, B32B 27/36

(54) **COVER LAYER FOR VISIBLE USE SURFACES OF AUTOMOTIVE TRIM PARTS**

(71) Applicant: Autoneum Management AG, 8406 Winterthur (CH)
(72) Inventor: DELMAS, Bertrand, 8406 Winterthur (CH)

(57) **Abstract**

Cover layer for automotive trim parts comprising a porous fibrous carrier layer and a polymeric thermoplastic matrix, wherein the polymeric thermoplastic matrix and the porous fibrous carrier layer form a composite layer forming the visible side of the cover layer. In the composite layer the polymeric thermoplastic matrix wraps the fibers of the carrier layer and saturates the pores between them and is such that the porous fibrous carrier layer remains visible, through the thermoplastic polymeric matrix itself, from the visible side of the cover layer.

## Description

### Technical Field

The present invention relates to the field of automotive trim parts installed in the interior and/or on the exterior of a road vehicle.

### Background Art

Many automotive trim parts comprise a use surface which, during the lifetime of the vehicle, may be subject to heavy wear while being visible to occupants and users of the vehicle. Typical examples of such trim parts are trunk floor coverings or passenger compartment floor coverings (including floor mats), in particular for VANs, SUVs, pickups and light commercial vehicles.

Typically, the visible use surface of these parts is formed by cover layers which may have to serve different functions. On the one hand, they may serve to achieve a desired appearance such as a certain coloring, grain or surface design. On the other hand, the same cover layers may serve to protect the part from external mechanical stresses such as strikes and scratches caused, for example, by rubbing exerted on them by passengers' feet and/or by objects during loading/unloading operations. Besides this, the cover layers may also serve to protect the part against penetration of moisture or liquids, in particular in areas which need regular cleaning and/or washing like storage areas, in particular in VANs and/or pickups and/or light commercial vehicles.

Over time, in order to perform all the functions mentioned above, cover layers used by automakers for the visible use surface of automotive trim parts have evolved into cover layers having a rather complex structure and comprising different types of materials, typically arranged in a multilayer fashion wherein each layer of the multilayer may predominantly have a specific function. Typical materials used for these latter layers are polymeric materials such as TPO and/or EPDM and/or RIM-PU, possibly combined with thin non-woven fabrics.

For example, CN208914720 discloses a vehicle carpet comprising a cover layer consisting of an EPDM layer and a TPO layer provided on an upper surface of the EPDM layer. The TPO layer comprises a TPO base layer, a coating layer printed on the TPO base layer and having a color and/or a texture and a transparent layer laminated on the upper surface of the coating layer. Furthermore, a thin fibrous non-woven layer may be optionally added on the lower surface of the EPDM layer. According to the disclosure of CN208914720, the transparent layer predominantly has the function to protect from abrasion the printed coating layer which, in turn, is primarily responsible for the visible appearance of the part. Always according to the disclosure of CN208914720, the EPDM layer has the function of increasing the sound insulation of the cover layer, while the thin fibrous non-woven layer -when present- fulfills a shock-absorbing function.

EP3366463 discloses a trim part for a motor vehicle with a cover layer comprising a carrier layer, a decorative printed thermoplastic film applied onto an upper surface of the carrier layer and a varnish layer applied on top of the printed thermoplastic film. According to the disclosure of EP3366463, the carrier layer preferably consists of a polymeric heavy layer on the back side of which a thin fibrous non-woven layer is applied. The polymeric layer preferably consists of PP or TPO. The decorative printed thermoplastic film may depict an image such as a nonwoven fabric, a felt, a wood grain, a woven fabric, a knitted fabrics, a carpet, etc. The top varnish layer, preferably consisting of a PU varnish, protects the decorative film against external influences such as strikes and scratches, while the carrier layer confers mechanical resistance and dimensional stability to the trim part.

Cover layers belonging to the state of the art like the above-mentioned ones, while offering an acceptable balance of pleasant appearance, resistance to abrasion, washability and mechanical resistance, may present also some drawbacks.

The visible appearance of this type of cover layers typically relies on a printed layer presenting some kind of regular pattern and/or depicting some kind of image (e.g. representing a wood grain, a woven fabric etc.). However, the resulting effect is typically perceived as artificial by the vehicle users, due to the unnatural regularity and/or to the inherent two-dimensionality of the printed layer. Furthermore, in case the decorative printed layer gets abraded or scratched during the life of the vehicle, the damage remains well-visible on the printed decorative surface along the whole life of the vehicle, since there is no way to repair the printed decorative layer. In additon to all this, the printed patterns and/or images may get distorted during any molding operations necessary for the manufacturing of the cover layer.

In addition to this, polymeric layers (e.g. TPO layers) typically used in surface cover layers belonging to the state of the art may suffer from premature aging and/or seam failures, due to the strong thermal cycles the part may be subjected to during the life of the vehicle. Furthermore, these same layers also have a rather poor elongation behaviour and a low tensile strength and, for this reason, during a production process involving molding operations, they may crack or thin substantially, compromising the mechanical properties of the final trim part.

It is the object of the present invention to provide a cover layer for use surfaces of automotive trim parts which overcomes the above-listed limitations of cover layers belonging to the state of the art, as well as trim parts comprising such cover layer and a process to make it.

### Summary of invention

The object of the invention is achieved by a cover layer according to claim 1, a trim part comprising such cover layer according to claim 14 and a manufacturing process according to claim 15.

In its main aspect, the invention concerns a cover layer for automotive trim parts having a visible side and comprising a porous fibrous carrier layer and a polymeric thermoplastic matrix, wherein the polymeric thermoplastic matrix and the porous fibrous carrier layer form a composite layer forming the visible side of the cover layer, wherein in the composite layer the polymeric thermoplastic matrix wraps the fibers of the carrier layer and saturates the pores between them and the porous fibrous carrier layer remains visible through the polymeric thermoplastic matrix from the visible side of the cover layer.

According to another aspect, the invention concerns an automotive trim part comprising such cover layer.

Surprisingly, it was found that a cover layer according to the invention may have abrasion resistance, aging, elongation, durability and washability properties comparable or even better than those of cover layers belonging to the state of the art. At the same time, it provides an appearance that, being essentially given by the random arrangement of the fibers of the porous fibrous carrier layer that remains visible through the polymeric thermoplastic matrix, is perceived as a natural and genuine textile appearance. Furthermore, possible damages (e.g., scratches) to the visible side of the cover layer according to the invention are less visible or not visible at all since they are camouflaged by the random distribution of fibers of the porous fibrous carrier layer.

Herein, a "layer" is a body consisting of one or more materials and comprised between two closely spaced surfaces, wherein the distance between the surfaces is substantially smaller than their dimensions. The two surfaces are indicated as the "sides" of the layer and they are opposite to each other. The distance between the two surfaces is indicated as the thickness of the layer, which may be variable.

A "porous fibrous layer" is a layer consisting of fibers, in which interstices are present between fibers, having dimensions substantially smaller than the length of the fibers. These interstices are here referred to as "pores".

A porous fibrous "carrier" layer is a porous fibrous layer which is self-supporting and provides dimensional stability and mechanical consistency to the cover layer according to the invention.

A "composite layer" is a layer consisting of a composite material. A composite material is a material resulting from a heterogeneous mixture of two or more constituents (the "components" of the composite material), having different physical and/or chemical properties. A common example of composite material is concrete, wherein loose stones are held together by a matrix of cement. Other common examples of composite materials are carbon-fiber reinforced plastics (CFRP) and glass-fiber reinforced plastics (GFRP).

In the cover layer according to the invention, the polymeric thermoplastic matrix and the porous fibrous carrier layer form a composite layer on the visible side of the cover layer, in which the polymeric thermoplastic matrix completely wraps the fibers and saturates the pores between them.

In such a cover layer, the polymeric thermoplastic matrix provides abrasion resistance and washability properties, while keeping the porous fibrous carrier layer visible. At the same time, the porous fibrous carrier layer, being visible through the polymeric thermoplastic matrix, confers to the cover layer a natural and genuine textile appearance, while guaranteeing good dimensional stability and mechanical properties, in particular elongation properties and tensile strength, thanks to its fibrous nature.

In order to guarante good washability properties, it is essential that, within the composite layer according to the invention, the polymeric thermoplastic matrix completely wraps the fibers of the porous fibrous layer and saturates the pores between them making the layer completely impervious to gases and liquids under temperature/pressure conditions typical of passenger vehicles.

Thus, the composite layer according to the invention realizes a synergistic effect between the polymeric thermoplastic matrix and the porous fibrous carrier layer, both of which contribute both to the aesthetic appearance of the cover layer and to the performance related to its use, such as abrasion resistance, elongation propreties, tear strength, durability, and washability.

Surprisingly, the cover layer according to the invention may be realized with a very limited thickness. Preferably, the thickness of the cover layer according to the invention is comprised between 1mm and 8mm, more preferably between 2mm and 6mm and even more preferably between 2mm and 4mm. This thickness range guarantees that the packaging space taken by the cover layer according to the invention is comparable or even lower than that of cover layers according to the state of the art.

The composite layer according to the invention, which is formed by the polymeric thermoplastic matrix and by the porous fibrous layer and forms the visible side of the cover layer according to the invention, may comprise the whole porous fibrous carrier layer, thus essentially corresponding to the cover layer according to the invention. However, the composite layer according to the invention preferably comprises only a part of the porous fibrous carrier layer and thus covers only a part of the overall thickness of the cover layer according to the invention. Increasing the thickness of the composite layer, in fact, may lead to an improvement of some performance related to the use of the cover layer according to the invention, such as abrasion resistance or durability. However, increasing the thickness of the composite layer above a certain level, only marginal performance improvements are obtained, at the cost of a greater processing difficulty and of a greater consumption of the material used for the polymeric thermoplastic matrix. In addition to this, having a certain portion of the porous fibrous carrier layer not comprised in the composite layer according to the invention may lead to an improvement of the sound insulation guaranteed by this same cover layer.

Preferably, at least 10% of the thickness of the porous fibrous carrier layer is not comprised in the composite layer according to the invention, more preferably at least 40% and even more preferably at least 70%.

The composite layer according to the invention may comprise, on the visible side of the cover layer according to the invention, a sub-layer consisting only of the polymeric thermoplastic matrix. This surface sub-layer may help improve some performance of the cover layer according to the invention, such as washability and durability. However, it may reduce the visibility of the porous fibrous carrier layer from the visible side of the cover layer. In case this surface sub-layer is present in the composite layer according to the invention, its thickness is preferably less than 30% of the thickness of the cover layer according to the invention, more preferably less than 20% and even more preferably less than 10%.

The side of the composite layer according to the invention corresponding to the visible side of the cover layer is preferably not smooth in order to prevent that the cover layer has a glossy/shiny appearance, which is generally undesirable in the automotive field. This effect may be obtained, for example, by imparting a grain or embossed design to the side of the composite layer according to the invention corresponding to the visible side of the cover layer.

The porous fibrous carrier layer may comprise any kind of natural and/or synthetic fibers common in the industry. Examples of natural fibers are cotton, wool, flax, hemp, bamboo, sisal, jute, coconut and abaca fibers. Examples of synthetic fibers are polypropylene fibers, polyethylene fibers, polyester fibers, for instance terephthalate-based polyester fibers such as polyethylene-terephthalate (PET) fibers, polylactic acid (PLA) fibers and polyamide (PA) fibers, in particular polyamide 6 or polyamide 6.6 fibers. Synthetic fibers may be mono-component or bicomponent. Mono-component fibers are made from a single material, while bicomponent fibers are synthetic fibers made from two polymers of different chemical and/or physical structure that are tightly connected to each other along the fiber length. Bicomponent fibers may be produced using processes known in the art, e.g. by melt spinning. The porous fibrous layer may consist of only one single kind of fibers but it may also be a mix of fibers of different kinds.

Advantageously, the fibers of the porous fibrous carrier layer may be at least partially of a recycled and/or reclaimed nature, in order to reduce the environmental impact of the manufacturing process of the cover layer according to the invention, in particular its CO₂ footprint. In particular, the porous fibrous carrier layer may comprise fibers in the form of a shoddy natural fiber, for example a shoddy cotton, and/or in the form of a shoddy synthetic fiber, for example a shoddy polyester. A shoddy type of fibers is here defined as comprising at least 51 % by weight of recycled fibers of the concerned material. For instance, a shoddy cotton contains at least 51% by weight of recycled cotton fibers, being the remaining 49% by weight constituted by fibers of a different material and/or by virgin fibers.

Furthermore, the porous fibrous carrier layer according to the invention preferably comprises a binder, in an amount preferably comprised between 10% and 50% by weight, even more preferably comprised between 20% and 40% by weight. The binder may be of a thermoset or of a thermoplastic nature. In both cases, some kind of thermal treatment is needed in order to activate it. Thanks to the binder, during the production process of the cover layer and/or of the trim part according to the invention the fibers of the porous fibrous layer may be firmly bonded together along their whole length at the same time as the cover layer and/or the trim part according to the invention is moulded into the desired shape. A thermoset binder may be preferable when enhanced mechanical properties and structural consistence are needed. On the other hand, a binder in the form of thermoplastic binder fibers may be preferable when very complex 3-dimensional shapes have to be realized and it may also be advantageous for sustainability, when the thermoplastic binder fibers and the other fibers of the porous fibrous carrier layer belong to the same chemical group, e.g. polyesters.

A thermoset binder is preferably in the form of an epoxy resin or a phenolic resin or a mixture of both. A thermoplastic binder is preferably in the form of thermoplastic binder fibers. These are fibers comprising at least one portion which melts as a result of a thermal treatment, forming bonds with all the other fibers at their crossing/contact points. The melting temperature (called also "activation temperature" of the binder fibers) of the binder fibers (or the portion of the binder fibers that melts) must obviously be lower than that of all the other fibers (and of the portion of the binder fibers that possibly does not melt). Binder fibers may be mono-component or bicomponent fibers. Particularly preferred as thermoplastic binder fibers are thermoplastic bicomponent core-sheath binder fibers. Thermoplastic bicomponent core-sheath binder fibers are bicomponent fibers wherein one of the two components (the sheath) surrounds the other (the core). The sheath component is the part of the fiber that melts during thermal treatment as described above. In the bicomponent core-sheath binder fibers the first polymer is preferably polyethylene terephthalate (PET) or polybutylene terephthalate (PBT) and the second polymer is preferably a copolymer of polyethylene terephthalate (coPET) or a copolymer of polybutylene terephthalate (coPBT).

The fibers comprised in the porous fibrous carrier layer may have specific colors, to impart a desired tone or shade of color to the visible surface of the cover layer according to the invention.

The fibers constituting the porous fibrous carrier layer may be both staple fibers and endless fibers (often referred to also as "filaments"). This applies also to the case of thermoplastic binder fibers that may be comprised in the porous fibrous layer according to the invention. Staple fibers are fibers that, differently from endless filaments, come in discrete predefined lengths. In particular, staple fibers comprised in the porous fibrous layer preferably have a length comprised between 32mm and 76mm.

The fineness of the fibers constituting the porous fibrous layer is preferably between 0.5denier and 25denier, more preferably between 0.5denier and 16denier, even more preferably between 0.5denier and 12denier.

The formation of the porous fibrous carrier layer according to the invention is preferably performed by first preparing a fibrous non-woven layer in the form of a soft mat and consisting of fibers in the desired fibrous composition -hereafter referred to as "semi-finished product" or simply " semi-finished"- and then molding it under heat.

The production of the semi-finished may take place according to any process known in the art. Such process may comprise, in particular, a first step for the formation of a fibrous web consisting of randomly oriented and unbound fibers in the desired composition and a second step for the partial consolidation of this same fibrous web. Besides these two steps, the production of the semi-finished may also involve other steps such as -for example- carding and cross lapping, which may be considered in order to provide to the fibers forming the web specific preferred orientations.

The first process step for the formation of the fibrous web consisting of randomly oriented and unbound fibers in the desired composition may occur by means of techniques known in the art such as -for example- air-laying, wet-laying, spun-laying, melt-blowing and electro-spinning. Primary purpose of this step consists in obtaining a mixture of randomly oriented unbound fibers with the desired composition, which is as homogeneous as possible.

The second process step for the partial consolidation of the above-mentioned fibrous web may occur by means of bonding techniques known in the art such as -for example- thermal bonding, chemical bonding, mechanical bonding or a combination thereof. Examples of thermal bonding are hot calendering and/or infrared heating and/or ultrasonic bonding. Examples of chemical bonding are resin/spray powder bonding and/or foam bonding. Examples of mechanical bonding are needle-punching and/or hydro-entanglement. The primary purpose of this partial consolidation step consists in loosely binding the fibers of the fibrous web in the semi-finished product to each other in such a way to just provide to the semi-finished itself the consistency required to handle it during the production process of the cover layer or the trim part according to the invention, maintaining though the semi-finished in the form of a soft mat. The partial, loose bonding of the fibers in the semi-finished is thus very different from the complete, firm bonding of the fibers that takes place during the molding under heat of the porous fibrous carrier layer.

The semi-finished has preferably an area weight comprised between 100gr/m² and 1600gr/m², more preferably between 250gr/m² and 1000gr/m² and even more preferably between 400gr/m² and 650gr/m². The thickness of the semi-finished material is preferably comprised between 1mm and 15mm, more preferably between 2mm and 10mm and even more preferably between 4mm and 7mm.

In the cover layer according to the invention, the porous fibrous carrier layer forms, together with the polymeric thermoplastic matrix, a composite layer forming the visible side of the cover layer itself and in which the thermoplastic matrix completely wraps the fibers of the porous fibrous carrier layer and saturates the pores between them.

In addition to this, in order to obtain the desired effects, the material or materials of the polymeric thermoplastic matrix must be such that the porous fibrous carrier layer remains visible through the polymeric thermoplastic matrix from the visible side of the cover layer according to the invention. This may be obtained by means of materials that are optically transparent or translucid. Transparent materials allow light to pass through without appreciable scattering. When seen through a transparent material, objects appear clear and with substantially well defined shapes and boundaries. Translucent materials allow light to pass through too, however when light goes through a translucent material relevant light scattering phenomena may occur. As a consequence, when seen through a translucent material, objects may appear blurred and with undefind shapes and boundaries, but they remain anyway visible.

The polymeric thermoplastic matrix may advantageously comprise recycled polymericl material, in order to reduce the environmental impact of the manufacturing process of the cover layer according to the invention, in particular its CO₂ footprint.

The polymeric thermoplastic matrix may contain colored pigments to impart a desired tone or shade of color to the visible surface of the cover layer according to the invention. However, even when color pigments are added to the polymeric thermoplastic matrix, it is essential that the porous fibrous carrier layer remains visible through the polymeric thermoplastic matrix itself.

The polymeric thermoplastic matrix according to the invention may comprise thermoplastic polymers such as a polyamide, for example polyamide 6 or polyamide 6.6, a polypropylene or a polyester, for example a terephthalate-based polyester such as polyethylene terephthalate (PET) or a copolymer of a polyester, for example a copolymer of a terephthalate-based polyester such as a copolymer of polyethylene terephthalate (CoPET) or polycarbonate (PC). Other examples of thermoplastic polymers that may be used for the polymeric layer according to the invention are polymethyl methacrylate (PMMA), polyetheretherketon (PEEK), poly-lactic acid (PLA) and polyhydroxyalkanoate (PHA).

Preferably, the porous fibrous carrier layer and the polymeric thermoplastic matrix belong to the same chemical group, which may favour recyclability both of production waste as well as of complete cover layers and/or trim parts according to the invention at the end of the vehicle lifetime. In a preferred embodiment, both the porous fibrous carrier layer and the thermoplastic matrix consist of a polyester.

In a particularly preferred embodiment, the porous fibrous carrier layer consists of fibers consisting of PET and/or CoPET and the polymeric thermoplastic matrix consists of CoPET. This embodiment is particularly advantageous in terms of processability and recyclability.

In another particularly preferred embodiment, the porous fibrous carrier consists of fibers consisting of PET and/or CoPET and the polymeric thermoplastic matrix consists of polycarbonate. Compared to the case in which the polymeric thermoplastic matrix consists of CoPET, this embodiment may offer a better durability, albeit at the cost of a lower level of recyclability. Still, even the level of recyclability of this embodiment may be considered acceptable in many applications, since polycarbonate and PET/CoPET belong to the chemical family of polyesters.

The formation of the composite layer according to the invention may be obtained according to methods known in the art.

In a preferred embodiment, the composite layer according to the invention is formed by a method that comprises at least the following three steps: depositing a polymeric thermoplastic material on the surface of a porous fibrous layer, heating the polymeric thermoplastic material so that it softens and/or melts and flows around the fibres of the porous fibrous layer and penetrates between them so as to saturate the pores between them, and eventually cooling the polymeric thermoplastic material so that it hardens around the fibers and in the pores between them, thus forming the composite layer layer according to the invention.

In this preferred embodiment for the formation of the thermoplastic polymeric matrix according to the invention, the amount of polymeric material deposited on the surface of the porous fibrous layer has preferably an area weight comprised between 50gr/m² and 1000gr/m², more preferably between 100gr/m² and 500gr/m² and even more preferably between 150gr/m² and 300gr/m².

In this same preferred embodiment, the deposition step may occur according to any techniques known in the art. For example, by scattering a polymeric thermoplastic material in the form of powder on the surface of a porous fibrous layer or by laminating and/or extruding a polymeric thermoplastic material in the form of a layer or a film on the surface of a porous fibrous material.

In a particularly preferred embodiment of this type, the deposition step consists in scattering on the surface of a porous fibrous layer a CoPET powder having a grain size preferably comprised between 100micron and 800micron, more preferably between 200micron and 700micron, even more preferably between 400micron and 600micron. In this embodiment, the Melt Flow Index (MFI) of the CoPET is preferably between 10gr/10min and 40gr/10min, more preferably between 15gr/10min and 30gr/10min at 190degC under 1.6kg. A combination of powder grain size and MFI within these ranges assures that, when the CoPET powder is softened by heat treatment, it may effectively flow around the fibers of the porous fibrous layer and saturate its pores. In this embodiment, the melting temperature of the CoPET is preferably between 120degC and 180degC, more preerably between 140degC and 170degC. These temperatures may be easily achieved with standard equipment used in the field.

In another particularly preferred embodiment of this type, the deposition step consists in scattering on the surface of a porous fibrous layer a polycarbonate (PC) powder having a grain size within the same ranges specified above for the CoPET powder, but having a Melt Flow Index (MFI) between 10gr/10min and 40gr/10min, preferably between 15gr/10min and 25gr/10min at 300degC under 1.2kg. A combination of powder grain size and MFI within these ranges assures that, when the polycarbonate powder is softened by heat treatment, it may effectively flow around the fibers of the porous fibrous layer and saturate its pores. In this embodiment, the melting temperature of the polycarbonate is preferably between 220degC and 320degC, more preferably between 240degC and 280degC. These temperatures may be easily achieved with standard equipment used in the field.

The embodiments here above represent just two examples in which the deposition step consists in scattering on the surface of a porous fibrous layer a polymeric thermoplastic material in the form of a powder. Other materials, different from CoPET and polycarbonate may be used. Furthermore, the thermoplastic material may also be in a form different from a powder. Depending on the thermoplastic material used and on its form, the ranges for the powder grain size and for the MFI may easily be adjusted by the person skilled in the art.

The cover layer according to the invention may comprise, besides the porous fibrous carrier layer and the thermoplastic matrix, also other layers.

In one embodiment, the cover layer according to the invention comprises an acoustic barrier layer, positioned on the side of the cover layer opposite the visible side. An "acoustic barrier layer" is a layer that is air-tight or air-impervious, i.e. that does not allow air to move in our out of it, thus hindering the propagation of acoustic waves. In the cover layer according to the invention, the function of the acoustic barrier layer consists in enhancing the sound insulation of the cover layer according to the invention.

When a particularly lightweight cover layer and/or trim part according to the invention is desired, the area weight of the barrier layer is preferably between 10g/m² and 200g/m², more preferably between 50g/m² and 150g/m² and the total area weight of the cover layer according to the invention is between 250gr/m² and 1600gr/m², more preferably between 400gr/m² and 1200gr/m² and even more preferably between 600gr/m² and 1000gr/m². In this case, a preferred embodiment of the barrier layer is a film of polymeric nature, preferably comprising at least one of the polymers or copolymers selected from the group consisting of polyesters such as polyethylene terephthalate (PET) or polybutylene terephthalate (PBT); polyamides such as polyamide 6 or polyamide 66; polyolefins such as polypropylene (PP), polyethylene (PE); thermoplastic elastomers (TPEs) such as thermoplastic polyolefin (TPO), thermoplastic polyurethane (TPU); elastomers such as EPDM-based elastomers or butadiene-based elastomers or silicones; high performance polymers such as polytetrafluoroethylene (PTFE), polyetherimide, polysulfone, polyethersulfone, polyetheretherketone (PEEK); ethylene vinyl acetate (EVA); biopolymers such as polylactic acid (PLA).

Preferably the material or materials used for the film and the material or materials used for the porous fibrous carrier layer and/or for the polymeric thermoplastic matrix belong to the same chemical group, making recycling easier. The film may be mono-layer, bi-layer or multi-layer. Bi-layer or multilayer films may be used to further increase stability, elasticity and/or robustness.

On the other hand, when a cover layer with a particularly enhanced sound insulation is desired, the area weight of the barrier layer is preferably between 500g/m² and 8000g/m², more preferably between 1500g/m² and 5000g/m² and even more preferably 2000g/m² and 3500g/m². In this case, the total area weight of the cover layer according to the invention is between 600gr/m² and 10000gr/m², more preferably between 2000gr/m² and 6000gr/m² and even more preferably between 2500gr/m² and 4000gr/m².

In this case, a preferred embodiment of the acoustic barrier layer is a layer comprising a matrix of thermoplastic elastomeric material, mass-loaded with an inorganic filler. Such a layer is commonly referred to as "heavy layer" in the field, it is air-tight and it is thus suitable for acting as a barrier layer in the cover layer according to the invention. In this embodiment of the acoustic barrier layer, the material or materials comprised in the thermoplastic elastomeric matrix are preferably selected from the group consisting of ethylene vinyl acetate copolymer (EVA); Ethylene Propylene Diene Monomer (EPDM); polyesters such as polyethylene terephthalate (PET) and/or polybuthylene terephthalate (PBT); poly-propylene (PP); polyethylene such as High Density Polyethylene (HDPE) and/or Low Density Polyethylene (LDPE) and/or Ultra High Molecular Weight Polyethylene (UHMWPE); Poly Vinyl Chloride (PVC); polycarbonate (PC); polyamide such as PA-4 and/or PA-11 and/pr PA-12 and/or PA-6 and/or PA-66; Thermoplastic Polymide (TPI); Thermoplastic Polyolefin (TPO); Thermoplastic Polyurethane (TPU); Poly Tetra Fluoro Ethylene (PTFE); Poly Ether Ether Ketone (PEEK); Acrylonitrile Butadiene Styrene (ABS); Poly Methyl Metha Crylate (PMMA). The inorganic filler is preferably one of calcium carbonate (CaCO₃) and/or Barium Sulphate (BaSO₄). In addition, the amount of inorganic filler is preferably up to about 85% by weight.

Always in this embodiment of the acoustic barrier layer, the thickness of the barrier layer is preferably between 0.2mm and 5mm, more preferably between 0.8mm and 2.5mm.

The choice of the acoustic barrier layer, in particular its area weight and material, may depend on the desired trade-off between sound insulation capabilities and overall weight of the cover layer according to the invention.

Preferably, in the cover layer according to the invention the porous fibrous carrier layer and the acoustic barrier layer are adjacent to each other and they are laminated together. Here, by "laminated together", it is meant that they are permanently assembled together in such a way to act together under the action of the acoustic waves impinging on the sound attenuating trim part according to the invention. The lamination process may take place by such means as, for example, heat and/or pressure and/or welding and/or an adhesive.

This lamination process may be easier in case the acoustic barrier layer and the porous fibrous carrier layer comprise materials belonging to the same chemical group.

The trim part according to the invention may comprise, besides the cover layer according to the invention, also other layers such as spring layers and/or sound absorbing layers and/or decorative back-layers. These additional layers are positioned on the side of the cover layer opposite the visible side, i.e. they are positioned between the cover layer and the vehicle body when the part is in use.

A spring layer is a layer that, when the trim part according to the invention is in use, is positioned between the cover layer according to the invention and the vehicle body and that has the function to isolate the cover layer according to the invention from the vibrations of the vehicle body, thus enhancing the sound insulation properties of the trim part according to the invention. In order to fulfil its function, the spring layer must be arranged in such a way that vibrations from the vehicle body can be transmitted effectively to it. In order to obtain this, in some embodiments the side of the spring layer opposite the one facing the cover layer may be at least partially in contact with the vehicle body. However, this is not essential for the spring layer to fulfil properly its function.

Preferably, the spring layer has a dynamic compressional Young's modulus not higher than 300kPa, more preferably not higher than 150kPa, even more preferably not higher than 80kPa. In addition, the spring layer has a thickness which may be variable and that is preferably comprised between 1mm and 80mm, more preferably between 3mm and 50mm and even more preferably between 5mm and 40mm. In general, a lower dynamic compressional Young's modulus and a higher thickness may provide a better performance, i.e. the spring layer better isolates the cover layer from the vibrations of the vehicle body. However, in practical cases the thickness of the spring layer may be limited by design constraints such as packaging space or cost.

The dynamic compressional Young's modulus of the spring layer may be measured by means of the commercially available tool Elwis-S, sold by Autoneum Management AG. Standard tests with the Elwis-S system are carried out on flat circular samples having a diameter of 100mm. However, in case it is not possible to extract a reasonably flat sample with such a diameter from the trim part, the test can be conducted also on samples with a smaller diameter. Preferably, the diameter of the sample should be at least 60mm. In addition, the load mass used for the Elwis-S tests should be such to guarantee that the sample under test is properly loaded and evenly excited over all its surface. For the execution of the tests with a standard circular sample having a diameter of 100mm, a load mass comprised between 150grams and 400grams is preferable. For the execution of the tests with a circular sample having a different diameter, the top load mass should be rescaled based on the sample surface. Preferably, the dynamic compressional Young's modulus in Elwis-S is obtained by averaging over a range of frequencies which is optimal for this measurement system, for example between 300Hz and 700Hz.

The spring layer may comprise any material, provided it fulfils the above-described primary function. Preferably, it comprises porous materials and/or cellular materials, which is advantageous in terms of weight reduction.

In a first embodiment, the spring layer according to the invention consists of a fibrous porous layer. In this embodiment, the fibrous material or materials used for the spring layer may essentially be the same as those used for the porous fibrous carrier layer according to the invention and previously described. However, in this embodiment the spring layer has preferably a lower density than the porous fibrous carrier layer according to the invention, i.e. it is preferably much loftier and less compressed, since this helps enhancing its isolation function against vibrations of the vehicle body. In this embodiment, the density of the spring layer is preferably between 30kg/m³ and 250kg/m³, more preferably between 40kg/m³ and 200kg/m³ and even more preferably between 50kg/m³ and 150kg/m³. This first embodiment of the spring layer may offer advantages in terms of end-of-life recyclability of the sound attenuating trim part according to the invention, in particular when the material or materials of the spring layer belong to the same chemical group of the material or materials of the acoustic barrier layer and/or of the porous fibrous carrier layer and/or of the polymeric thermoplastic matrix.

In a second embodiment, the spring layer according to the invention consists of an open-cell foam, preferably a polyurethane foam. In this embodiment, the density of the foam is preferably between 30kg/m³ and 200kg/m², more preferably between 40kg/m³ and 120kg/m³ and even more preferably between 50kg/m³ and 90kg/m³. This realisation of the spring layer may be advantageous as foams, and in particular polyurethane foams, offer excellent moulding possibilities and greater design flexibility. This embodiment may therefore be advantageous if the trim part according to the invention is to be fitted to a body panel with a particularly complex three-dimensional shape.

A sound absorbing layer is a layer that, when the part is in use, is positioned between the cover layer according to the invention and the vehicle body, and that has the function to absorb the acoustic waves radiated by the vehicle body, thus enhancing the sound insulation properties of the trim part according to the invention. In order to fulfil its function, a sound absorbing layer must be arranged in such a way that its side opposite the one facing the cover layer is at least partially exposed to the acoustic waves radiated by the vehicle body. In some embodiments, this is obtained by leaving an air-gap between the vehicle body and said side of the sound absorbing layer.

The sound absorbing layer may comprise any material, provided it fulfils the above-described primary function. Preferably, it comprises porous materials and/or cellular materials, which is advantageous in terms of weight reduction.

Preferably, the sound absorbing layer has an Air Flow Resistivity (AFR) comprised between 300Ns/m³ and 6000Ns/m³, more preferably between 600Ns/m³ and 4000Ns/m³ and even more preferably between 1000Ns/m³ and 2500Ns/m³. The AFR is measured according to ISO 9053-1:2018. In addition, the spring layer has a thickness which may be variable and that is preferably comprised between 1mm and 80mm, more preferably between 3mm and 50mm and even more preferably between 5mm and 40mm.

In a first embodiment, the sound absorbing layer according to the invention consists of a porous fibrous layer. The material or materials that may be used for the sound-absorbing layer according to this first embodiment are the same as those already mentioned for the first embodiment of the spring layer.

In a second embodiment, the sound absorbing layer according to the invention consists of an open-cell foam. The material or materials that can be used for the sound-absorbing layer according to this second embodiment are the same as those already mentioned for the second embodiment of the spring layer.

In some embodiments, in order to enhance its sound absorbing properties, the sound absorbing layer may comprise a thin fibrous porous layer (commonly known in the field as "scrim") or a micro-perforated foil with tuned Air Flow Resistivity (AFR), laminated on the side of the sound absorbing layer opposite the one facing the cover layer according to the invention. In order to obtain the desired improvement of the sound absorbing properties of the sound absorbing layer the AFR of the fibrous scrim or of the micro-perforated polymeric foil is preferably at least 50% of the total AFR of the sound absorbing layer, even more preferably at least 75% in all areas where the fibrous scrim or micro-perforated film is applied. The fibrous scrim or the micro-perforated polymeric foil has preferably an area weight not higher than 400 g/m², more preferably not higher than 200 g/m², in order not to substantially increase the overall weight of the trim part according to the invention.

A decorative backing layer is a layer that, when the part is in use, covers the side of the trim part opposite the side of the cover layer, i.e. the side that, when the part is in use, faces the vehicle body. This decorative layer has the function to improve the appearance of the trim part according to the invention, when seen from this same side. This may be relevant in case of removable parts such as, for example, trunk floor coverings.

For the decorative backing layer, any materials used in the field for the above-mentioned decorative purpose may be used. Examples are fibrous scrims, needle-punched carpets or tufted carpets.

All the above listed preferred embodiments for the cover layer, the spring layer, the sound absorbing layer and the decorative backing layer may advantageously be combined by the person skilled in the art as technically possible and as deemed expedient, depending on the desired trade-off between in-vehicle acoustic effectiveness, weight, process complexity and design constraints.

The cover layer according to the invention may be manufactured using tools and techniques known in the art.

A first production process of the cover layer according to the invention, suitable for the case where a heavy layer is to be included in the cover layer to improve sound insulation, may comprise at least the following steps:
(a1). a fibrous porous layer in the form of a semi-finished and comprising a binder (e.g., thermoplastic bicomponent core-sheath binder fibers) is provided on a horizontal support surface (e.g. a work table or a conveyor belt). A thermoplastic material in powder form is scattered on its top side. This is the side that will be, at the end of the process, the visible side of the cover layer according to the invention. The scattering operation may be carried out by hand or by means of an automated scatterer, as known in the field.
   The grain size of the thermoplastic material in powder form is preferably similar to or greater than the typical pore size of the porous fibrous layer, to favor that the thermoplastic material, when scattered on the porous fibrous layer, remains predominantly on the surface of the same porous fibrous layer and does not substantially penetrate into it.
   The powder is preferably spread in sufficient quantity to cover the porous fibrous layer as evenly as possible. For semi-finished layers having a rather irregular surface such as those obtained by means of an air-laying process, more powder may be necessary to ensure good, uniform coverage. For carded, needle-punched or calendered semi-finished layers, less powder may be enough because of the more regular surface of these porous fibrous layers.
(a2). The side of the porous fibrous layer on which the thermoplastic powder has been scattered is exposed to a heat source, e.g. an Infra-Red (IR) heater. The exposure time and temperature of the heat source should be adjusted so to soften the thermoplastic material in powder form as much as possible or even melt it while avoiding, at the same time, that such material starts to substantially flow around the fibres of the porous fibrous layer and into the pores between them. This may be obtained by adjusting the exposure time and the temperature of the heat source based on parameters such as the amount of thermoplastic material, its softening and melting temperatures and its Melt Flow Index.
(a3). The porous fibrous layer with the softened thermoplastic material on its top side is passed through a couple of nip-rollers chilled or at least maintained at room temperature, wherein the gap between the rollers is substantially smaller than the thickness of the porous fibrous layer (e.g., between one fifth and one third of the thickness of the porous fibrous layer). The passage through the nip rollers (at room temperature or even at a lower temperature, in case they are chilled) will make the thermoplastic material harden and adhere to the porous fibrous layer, while evenly spreading it over the surface of the porous fibrous layer itself. The result of this step is a porous fibrous layer evenly covered by a thin (i.e., much thinner than the porous fibrous layer) layer of thermoplastic material having a smooth surface. The thickness of the porous fibrous layer during this step does not substantially change. Furthermore, the thin layer of thermoplastic material resulting from this process step, while adhereing to the porous fibrous layer and evenly covering it, remains substantially on its surface with minimal penetration into the pores between its fibers.
(a4). A heavy layer is provided and arranged on the bottom side of the porous fibrous layer, i.e. on the side opposite to the one covered by the thin layer of thermoplastic material.
(a5). The multilayer consisting of the thin layer of thermoplastic material, the porous fibrous layer and the heavy layer is put inside a hot press. The gap of the hot press is set to be much lower than the thickness of the multilayer, for example between one fourth and one half of it. The temperature of the top plate of the press (i.e. the plate in contact with the thin layer of thermoplastic material) is adjusted to make the thermoplastic material soften. At the same time, the temperature of the top plate of the hot press is set to be above the activation temperature of the binder included in the porous firous layer. On the other hand, the temperature of the lower plate of the hot press is set to be above the softening point of the heavy layer, but below its melting point.
   The multilayer is then kept inside the hot press at least for a time which is long enough to obtain the following effects:
   - due to the compression in the hot press, the softened thermoplastic material flows around the fibers of the porous fibrous layer and into the pores between them;
   - due to the compression in the hot press the heavy layer adheres to the porous fibrous layer on the side opposite the one on which initially the thermoplastic material in powder form was scattered;
   - the binder included in the porous fibrous layer is activated (e.g. the sheath of the thermoplastic bicomponent binder fibers is molten).
   The time inside the hot-press may be adjusted by the person skilled in the art based on the amount of thermoplastic material and its Melt Flow Index and based also on the area weight/thickness of the porous fibrous layer and on the type/amount of binder included in it.
(a6). After a time sufficient to achieve all the effects listed above, the multilayer is removed from the hot press and placed in a cold molding tool comprising a lower half-mould and an upper half-mould that, when the moulding tool is closed, delimit a mould cavity having the three-dimensional shape desired for the cover layer according to the invention. Here, by a "cold molding tool" one means a tool where the upper and lower half-moulds are not actively heated during the molding operations.
(a7). The molding tool is closed and kept closed for a time sufficient for the cover layer to assume and maintain the desired shape, thanks to the hardening of the thermoplastic material and of the binder included in the porous fibrous layer. In this step, the polymeric thermoplastic material hardens around the fibers of the porous fibrous layer and in the pores between them, thus forming the polymeric thermoplastic matrix and the composite layer according to the invention. At the same time, this process step confers to the porous fibrous layer its "carrier" function: due to the presence of the binder and the compression, the porous fibrous layer becomes stiff and self-supporting, providing dimensional stability and mechanical consistency to the cover layer according to the invention. Furthermore, the compression in the molding tool may further force the thermoplastic material to flow around the fibers of the porous fibrous layer and in the pores between them, thus further increasing the thickness of the composite layer according to the invention. If desired, in this step the surface of the half-mould facing the visible side of the cover layer may be treated as known in the art so to confer to the visible side of the cover layer according to the invention a grain or embossed design.
(a8). After a time sufficient for the cover layer to assume and maintain the desired shape, the molding tool is opened and the cover layer according to the invention is removed from it.

In a second production process, which may be suitable for the case where a particularly lightweight cover layer is desired, step (a4) may be omitted or -in this same step- the heavy layer may be replaced by a polymeric film. When this is done, steps (a5) to (a8) should be adjusted accordingly, as known to the person skilled in the art.

The above described processes for the manufacturing of the cover layer according to the invention represent just two examples. Variations of these processes, in which different types of tools and/or further steps are considered to improve, for example, the flow of the thermoplastic material in the pores of the porous fibrous material, are possible and may be easily envisaged by the person skilled in the art.

Furthermore, a trim part according to the invention and comprising a cover layer according to the invention may also be easily obtained by an extension or by a variant of the above-mentioned processes.

For example, a trim part consisting of a cover layer according to the invention and a spring layer, wherein the spring layer consists of an open cell foam, may be obtained by taking the cover layer according to the invention resulting from step (a8) and back-foaming it using a foaming tool, in such a way to obtain the foam spring layer on the side of the cover layer opposite the visible side.

Similarly, trim parts according to the invention and comprising sound-absorbing layers and/or porous fibrous spring layers may be obtained by including such layers in the stack that is introduced into the hot press in step (a4) and modifying steps (a5) to (a8) accordingly, as known by the person skilled in the art.

All the embodiments previously described for the cover layer and/or the trim part according to the invention represent just possible material arrangements. By considering the features of the materials here described, in particular their nature, density, thickness and area weight, the person skilled in the art may derive from these embodiments further material arrangements that may be suitable depending on the circumstances.

In addition to this, further embodiments of the cover layer and of the trim part according to the invention may be derived from the description also by combining the different embodiments and examples of the invention and may be also derived from the description of the embodiments shown in the figures. The figures are schematic and not necessarily in scale. All ranges disclosed include end-points.

### Brief description of drawings

Figures 1 and 2 shows two examples of cover layers according to the invention.
Figures 3a to 3i show a process for the production of a cover layer according to the invention.

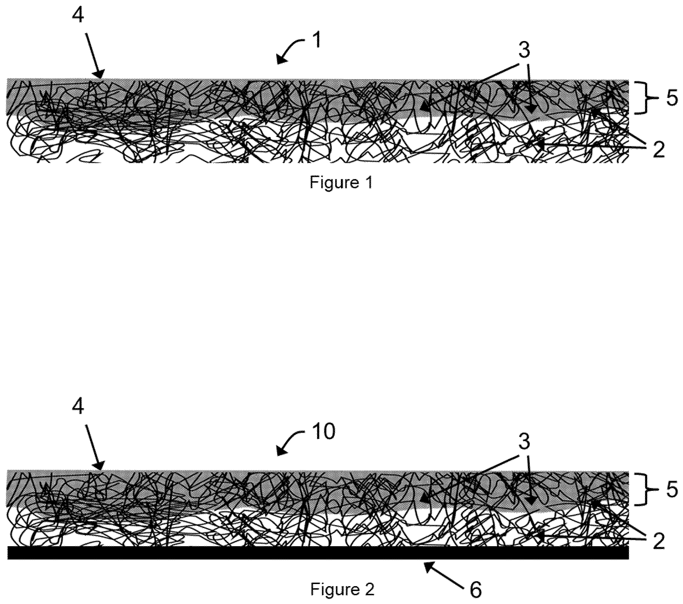

Figure 1 shows an example of a cover layer 1 according to the invention, comprising a porous fibrous carrier layer 2 and a polymeric thermoplastic matrix 3 which form a composite layer 5 comprising the visible side 4 of the cover layer 1. In this composite layer 5 the polymeric thermoplastic matrix 3 wraps the fibers and saturates the pores between them. It is to be noted that the porous fibrous carrier 2 comprises both the fibers included in the composite layer 5 and those which are not included in such layer, as indicated by the arrows in Figure 1. The porous fibrous carrier layer remains visible through the polymeric thermoplastic matrix. In the example shown in Figure 1, the composite layer 5 does not cover the whole thickness of the cover layer 1. In this example, approximately 50% of the thickness of the porous carrier layer is not comprised in the composite layer 5.

Figure 2 shows another example of a cover layer 10 according to the invention which further comprises a heavy layer 6 on the side opposite the visible side 4.

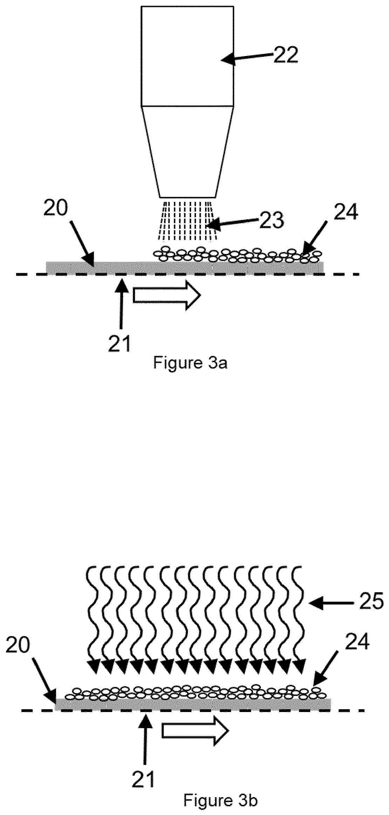

A cover layer according to the invention was produced following the process steps indicated in Figures 3a to 3i. A porous fibrous layer 20 was provided on a supporting conveyor belt 21 (see Figure 3a). The porous fibrous layer 20 was in the form of a semifinished having an area weight of about 600gr/m² and a thickness of about 8mm and it comprised the following fibrous mixture: 38% by weight of shoddy PET fibers, 30% by weight of shoddy cotton fibers and 32% by weight of PET/CoPET core-sheath binder fibers having an activation temperature of about 120degC.

As shown in Figure 3a, polycarbonate powder 23 was scattered on top of the porous fibrous layer by means of an industrial scatterer 22, in such a way that the powder grains 24 covered as homogenously and evenly as possible the surface of the porous fibrous layer 20. In total, 200gr/m² of polycarbonate powder 23 was scattered on top of the porous fibrous layer 20. The grain size of the polycarbonate powder was comprised between 400microns and 600microns. The polycarbonate used had a melting temperature of about 255degC and an MFI of 22gr/10min at 300degC under 1.2kg.

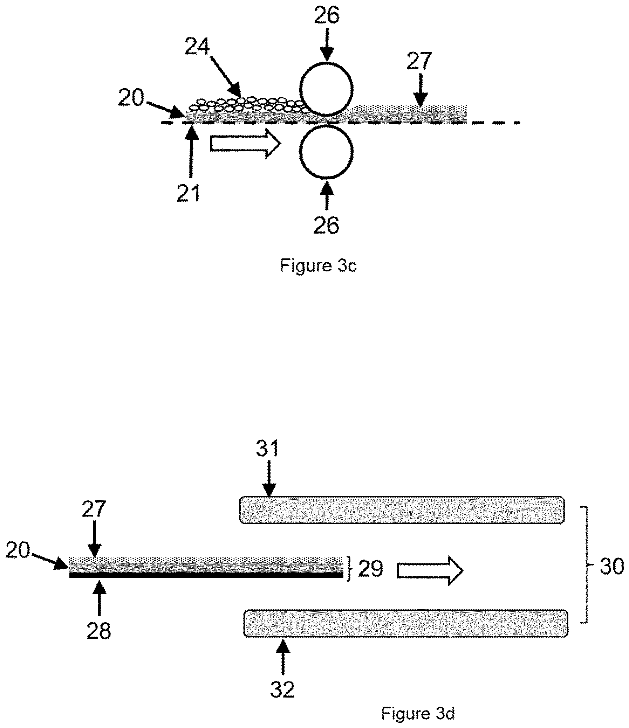

The porous fibrous layer with the polycarbonate powder scattered on top was exposed to an IR heater 25 (see Figure 3c). The temperature of the IR heater 25 was about 220degC and the exposure time was about 30seconds. This made the polycarbonate powder grains 24 soften, however without making the polycarbonate start to flow around the fibers of the porous fibrous layer 20 and into the pores among them.

After this, as shown in Figure 3c, the porous fibrous layer 20 with the softened polycarbonate powder 24 on top of it was passed between 2 nip rollers 26 at room temperature. The gap between the nip rollers was about 1.8mm. The passage through the small gap between the nip rollers at room temperature forced the polycarbonate layer to be spread in an even way over the surface of the porous fibrous layer, at the same time hardening it. The result of this step was a porous fibrous layer evenly covered by a thin (i.e., much thinner than the porous fibrous layer) layer of polycarbonate 27 having a smooth surface.

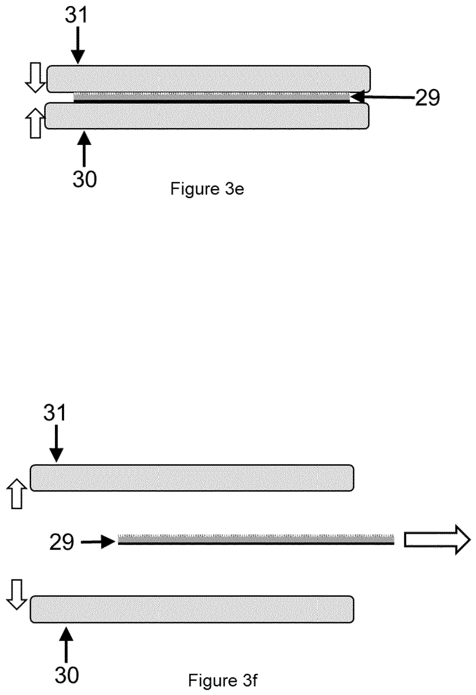

Subsequently (see Figure 3d), a heavy layer 28 consisting of EPDM mass-loaded with an inorganic filler, having a thickness of about 1.8mm and an area weight of about 3kg/m² was provided and arranged on the bottom side of the porous fibrous layer 20, i.e. on the side opposite to the one covered by the thin layer of polycarbonate 27. The multilayer 29 consisting of the thin layer of polycarbonate 27, the porous fibrous layer 20 and the heavy layer 28 was then put inside a hot press 30 comprising a top plate 31 and a bottom plate 32. The hot press was then closed (see Figure 3e), with a gap set to about 2.5mm. The temperature of the top plate 31 was set to 215degC, while that of the bottom plate 32 was set to about 70degC. The multilayer 29 was left inside the hot press 30 for about 50seconds. The chosen temperature of the top plate (i.e. the surface in contact with the thin layer of polycarbonate) was so to make the polycarbonate thin layer 27 soften. At the same time, the temperature of the top plate 31 was set to be above the activation temperature of the binder included in the porous fibrous layer 20. On the other hand, the temperature of the lower plate 32 of the hot press is set to be above the softening point of the heavy layer 28, but below its melting point. The duration of this compression step inside the hot press was empirically adjusted with a limited number of experiments in such a way to obtain the effects that were already previously mentioned:
- the softened polycarbonate flows around the fibers of the porous fibrous layer and into the pores between them;
- the heavy layer adheres to the porous fibrous layer;
- the binder included in the porous fibrous layer is activated.

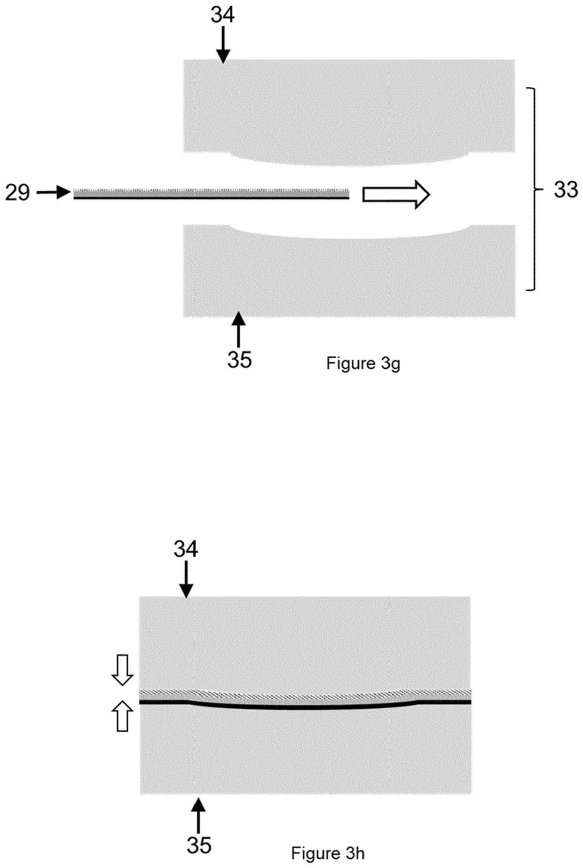

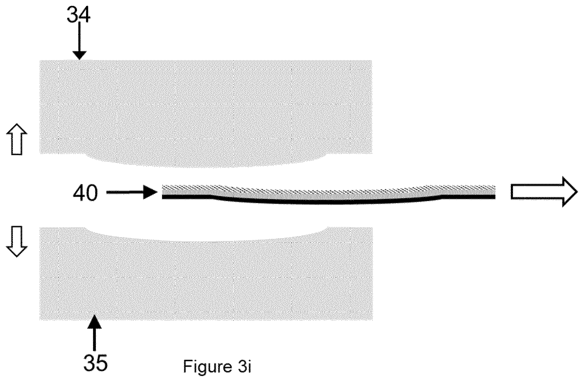

After this, as shown in Figures 3f and 3g, the hot press 30 was opened and the multilayer 29 was placed inside a cold molding tool 33 having an upper half-mould 34 and a lower half mould 35. The cold molding tool 33 was closed (see Figure 3h) and kept closed for about 45 seconds. After this it was opened (see Figure 3i) and the cover layer 40according to the invention was removed from the cold molding tool 33.

Abrasion and elongation tests were carried out on the cover layer according to the invention obtained as described in previous paragraphs. Elongation tests were carried out according to ISO 527-2:2012 on 5 specimens extracted from the cover layer according to the invention. The test specimens had a size of 170mm x 25mm, with a clamping distance of 100mm and a pre-load of 5N. Two quantities were evaluated: Young's modulus and tensile strength in machine direction, which is the most relevant direction for this kind of test. Results indicated a Young's modulus of 388MPa +/- 53MPa and a tensile strength of 10.22MPa +/- 0.62MPa, wherein the values indicated are averages over the 5 specimens and the uncertainties indicated are standard deviations.

Abrasion tests were carried out using a Taber 5155 rotary abraser, on two round samples having a diameter of 108mm extracted from the cover layer according to the invention. The first sample had an initial weight of 33.801gr, while the second sample had an initial weight of 33.105gr. For these abrasion tests an H22 wheel was used at a speed of 60revs/min, under a load of 10N and with the vacuum cleaner at 80% of its power. The The wheel was cleaned with a brush after 200, 500 and 800 revolutions. Results indicated that after 1000 revolutions, the weight reduction of the first sample was only 0.033gr, while the weight reduction for the second sample was only 0.020grams.

For comparative purposes, the same kind of tests were carried out on samples extracted from the cover layer of a state-of-the art trim part (a floor carpet insulator for a B-segment European commercial vehicle) consisting of a TPO layer backed by an EPDM layer and having an area weight of about 3.6kg/m², thus comparable to that of the cover layer according to the invention. Results of the elongation tests on 5 specimens indicated a Young's modulus of 195MPa +/- 18MPa and a tensile strength of 3.17MPa +/- 0.12MPa, both in machine direction. Both values are substantially lower than those obtained for the cover layer according to the invention. Results of the abrasion test on two samples having initial weight of respectively 32.359gr and 32.269gr indicated for both a loss of weight after 1000 revolutions of 0.074grams, substantially higher than that obtained for the cover layer according to the invention.

These results indicate that the cover layer according to the invention provides better elongation and abrasion properties, compared to the cover layer belonging to the state of the art.

## Claims

1. Cover layer for automotive trim parts (1,10,40) having a visible side (4) and comprising a porous fibrous carrier layer (2) and a polymeric thermoplastic matrix (3) **characterized in that** the polymeric thermoplastic matrix (3) and the porous fibrous carrier layer (2) form a composite layer (5) forming the visible side (4) of the cover layer, wherein in the composite layer (5) the polymeric thermoplastic matrix (3) wraps the fibers of the porous fibrous carrier layer (2) and saturates the pores between them and wherein the porous fibrous carrier layer (2) is visible through the polymeric thermoplastic matrix (3) from the visible side (4) of the cover layer.

2. Cover layer for automotive trim parts according to claim 1,
**characterized in that** at least 10% of the thickness of the porous fibrous carrier layer is not comprised in the composite layer, preferably at least 40%, even more preferably at least 70%.

3. Cover layer for automotive trim parts according to claim 1 or 2,
**characterized in that** the porous fibrous carrier layer comprises at least one of natural fibers, for example cotton fibers and synthetic fibers, for example polyester fibers, polypropylene fibers, polyamide fibers.

4. Cover layer according to any of the preceding claims, **characterized**
**in that** the porous fibrous carrier layer comprises fibers of a recycled and/or reclaimed nature.

5. Cover layer according to any of the preceding claims, **characterized**
**in that** the polymeric thermoplastic matrix comprises at least one of a polyester, preferably a terephthalate-based polyester, more preferably polyethylene terephthalate (PET), a copolymer of a terephthalate-based polyester, preferably a copolymer of polyethylene terephthalate (CoPET), polycarbonate (PC), polymethyl methacrylate (PMMA), polyetheretherketon (PEEK), poly-lactic acid (PLA), polyhydroxyalkanoate (PHA).

6. Cover layer according to any of the preceding claims **characterized**
**in that** it further comprises an acoustic barrier layer on the side opposite the visible layer.

7. Cover layer according to any of the preceding claims, **characterized**
**in that** the formation of the composite layer (5) is obtained by a method that comprises at least the following three steps:
- scattering a polymeric thermoplastic material in form of powder on the surface of a porous fibrous layer;
- softening or melting the polymeric thermoplastic material by means of a heat treatment, so that it flows around the fibers of the porous fibrous layer and penetrates between them to saturate the pores between them;
- cooling the polymeric thermoplastic material so that it hardens.

8. Cover layer according to claim 7, **characterized in that** the
thermoplastic material in form of powder comprises a copolymer of a polyester, preferably a copolymer of a terephthalate-based polyester, even more preferably a copolymer of PET (CoPET)

9. Cover layer according to claim 8, **characterized in that** the
thermoplastic material in powder form has a grain size comprised between 100micron and 800micron, more preferably between 200micron and 700micron, even more preferably between 400micron and 600micron.

10. Cover layer according to claim 8 or claim 9, **characterized in that** the
the copolymer of a polyester has and a Melt Flow Index comprised between 10gr/10min and 40gr/10min, more preferably between 15gr/10min and 30gr/10min at 190degC under 1.6kg.

11. Cover layer according to claim 7, **characterized in that** the
thermoplastic material in form of powder comprises polycarbonate

12. Cover layer according to claim 11, **characterized in that** the
thermoplastic material in powder form has a grain size comprised between 100micron and 800micron, more preferably between 200micron and 700micron, even more preferably between 400micron and 600micron.

13. Cover layer according to claim 11 or claim 12, **characterized in that**
the polycarbonate has a Melt Flow Index comprised between 10gr/10min and 40gr/10min, preferably between 15gr/10min and 25gr/10min at 300degC under 1.2kg

14. Automotive trim part comprising a cover layer according to claim 1.

15. A process for the production of a cover layer according to claim 1
and comprising at least the following steps:
(a1). provide a porous fibrous layer, preferably in the form of a semi-finished, and scatter a polymeric thermoplastic material in powder form on one of its sides;
(a2). expose the side on which the polymeric thermoplastic material in form of powder was scattered to a heat source to soften the polymeric thermoplastic material;
(a3). pass the porous fibrous layer with the softened thermoplastic material on top of it through a couple of nip rollers wherein the gap between the nip rollers is smaller than the thickness of the porous fibrous layer, preferably less than one third of the thickness of the porous fibrous layer, so to make the thermoplastic material form a thin layer on the side of the porous fibrous layer on which the powder was initially scattered;
(a4). place the multilayer consisting of the porous fibrous layer and of the thin polymeric thermoplastic layer in a hot press and close the press for a time sufficient for the polymeric thermoplastic material to soften and flow around the fibers of the porous fibrous layer and into the pores around them;
(a5). Open the hot press and transfer the multilayer into a cold molding tool having an upper half-mould and a lower-half mould;
(a6). Close the cold molding tool and keep it closed for a time sufficient for the multilayer to assume and keep the shape desired for the cover layer;
(a7). Open the cold molding tool and remove the cover layer from it.
